# DEMANDE DE BREVET EUROPEEN

(11) **EP 1 867 236 A2**
(43) Date de publication de la demande: **19.12.2007**
(21) Numéro de dépôt: 07447019.6
(22) Date de dépôt: 14.03.2007
(51) Int. Cl.: A23G 3/20, A23L 1/00, A23P 1/08, A47J 25/00, A23G 3/54, A23N 4/12

(54) **Procédé de fabrication pour fourrer des bananes**

(30) Priorité: 30.03.2006 BE 200600202
(71) Demandeur: Fernez, Jean-Philippe, 7062 Naast (BE)
(72) Inventeur: Fernez, Jean-Philippe, 7062 Naast (BE)

(57) **Abrégé**

En pressant la banane entre 2 guides (3) ayant un rayon déterminé proche de celui de la banane, on peut insérer une sonde creuse (1) au coeur de celle-ci.

La sonde (1) ayant le même rayon de courbure que les guides (3) trouera la banane au centre et sur toute sa longueur. En retirant la sonde et par un effet de succion la chair reste dans la sonde. On peut alors fourrer la banane avec n'importe quelle pâte ou crème alimentaire.

## Description

Le procédé consistant à insérer quelque chose dans un fruit n'est pas nouveau.

Bien souvent le fruit ne présente plus bien et ne peut pas toujours être mangé où l'on veut. (nécessité de couverts).

La banane fourrée au chocolat garde les avantages et l'aspect d'une banane ordinaire en ayant le goût du chocolat en plus. Elle est très savoureuse, elle peut servir de collation ou de goûter.

### Description technique du procédé :

**a-** Forer un trou du diamètre d'une sonde creuse (1 ) de quelques millimètres de profondeur au centre de la tête de la banane ou couper le bout de la banane côté tête.
**b-** On serre la banane entre 2 guides mobiles (3) ayant un rayon déterminé proche de celui d'une banane. Ces guides sont fixés sur un support (2). Les fixations (4) permettent aux guides un mouvement rectiligne de va et vient permettant de compresser ou libérer la banane. La compression de la banane par les 2 guides se fait par une cale ovale (5) dont l'axe ferme une bague (6) qui entoure les guides et qui est fixée sur le guide intérieur. Les guides peuvent légèrement modifier la courbure de la banane en la compressant pour l'amener au même rayon que la sonde. Les guides sont courbés, cylindriques et recouverts d'une matière souple pour pouvoir être en contact avec la plus grande surface de la banane et ne pas l'abîmer.
**c-** Par le trou percé ou par le bout coupé, on insère la sonde creuse (1) au coeur de la banane. La sonde doit avoir le même rayon de courbure que les guides support (3) et doit être un peu moins longue que la banane de façon à ne pas la transpercer.
**d-** Par un simple aller-retour de la sonde et en bouchant l'extrémité de celle-ci lors du retour par un bouchon (7) on extrait la chair de la banane.La chair entrée dans la sonde sera automatiquement chassée lors de l'opération suivante.
   La chair peut être récupérée.
**e-** On insère une pâte alimentaire ou du chocolat dans la cavité ainsi formée au coeur de la banane. Soit le chocolat chauffé peut couler librement, soit si le mélange n'est pas assez liquide, on peut par le principe d'une seringue et à l'aide d' une autre sonde identique à la première munie d'un piston, remplir de chocolat ou de crème le trou de la banane.
**f-** Un bouchon de paraffine fermera le trou après nettoyage.

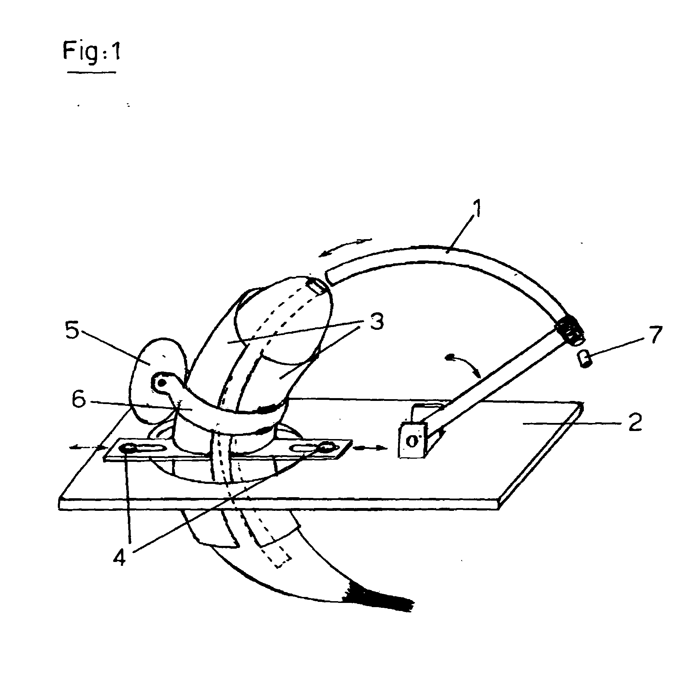

## Revendications

1. Procédé permettant l'extraction de la chair au centre de la banane et sur toute sa longueur en gardant intactes la nature et la présentation du fruit après manipulation.

2. Procédé utilisant une sonde creuse et 2 guides courbés selon un même rayon, les guides pouvant compresser la banane pour lui donner la courbe de la sonde.

3. Procédé suivant revendications 1 et 2. qui utilise des guides courbés, cylindriques et recouverts d'une matière souple pour pouvoir être en contact avec la plus grande surface de la banane et ne pas l'abîmer.

4. Procédé de fourrage des bananes qui respecte la propreté et l'hygiène grâce à un bouchon de paraffine ou n'importe quel autre moyen de former un bouchon
